# EUROPEAN PATENT SPECIFICATION

(11) **EP 1 322 090 B1**
(45) Date of publication and mention of the grant of the patent: **31.01.2007**
(21) Application number: 02102654.7
(22) Date of filing: 28.11.2002
(51) Int. Cl.: H04L 29/06, H04Q 7/38

(54) **Method and system for roaming between communication networks**
Methode und System für das Roaming zwischen Kommunikationsnetzwerken
Procédé et système pour l'itinérance entre des réseaux de communication

(30) Priority: 30.11.2001 FI 20012356
(43) Date of publication of application: 25.06.2003
(73) Proprietor: TeliaSonera Finland Oyj, 00510 Helsinki (FI)
(72) Inventor: Laukkanen, Jussi, 00250, Helsinki (FI); Ala-Luukko, Sami, 00200, Helsinki (FI)
(74) Representative: Äkräs, Tapio Juhani

(56) References cited:
- WO-A-00/76249
- DE-A- 19 742 681

## Description

### Field of the invention

The present invention relates to communications systems, and more particularly to mechanisms for simplifying roaming between two access networks.

### Background of the invention

The Internet Engineering Task Force has provided the Internet with mobility properties by defining a Mobile IP (Internet Protocol) protocol in standard RFC2002. Mobile IP protocol has a definition for both IPv4 (RFC2002) and IPv6 (Internet Draft: Mobility Support in IPv6). The Mobile IP allows IP data packets (datagrams) to be routed to mobile hosts or nodes irrespective of what their access point to the network is.

A mobile node's home IP network comprises a home agent HA, which is a kind of routing unit for maintaining location information on the mobile node and for tunnelling data packets to the right destination when the mobile node is outside its home network. In other words, a data packet addressed to the mobile node's IP home address is directed to the home agent HA, which encapsulates the data packet into another IP packet, in which the destination address is the tunnelling end point, 'Care-of Address' COA.

The above-mentioned RFC defines two different COA types: 1) *foreign agent COA*, i.e. the address of the network node in which the mobile node is registered; and 2) *co-located COA*, i.e. a temporary local IP address that the mobile node receives from the network. The mobile node registers the new COA in the home agent HA by transmitting a registration request. The encapsulation is called tunnelling, and a tunnel is the route along which the encapsulated IP data packet passes.

One end of the tunnel may comprise an element, an access node of a packet-switched wireless access network, such as GPRS (General Packet Radio Service) network or WLAN (Wireless Local Area Network) network. One end of the tunnel may comprise a GGSN (GPRS gateway support node) node of GPRS network, for example. This network node decapsulates the data packet and forwards it to the mobile node. In the case of a GGSN node, routing a data packet onwards takes place as will be described below using the GPRS network.

When a mobile node replies to the sender, the IP reply packet is forwarded directly to a peer on the basis of its IP address. In more advanced versions of the Mobile IP, the home agent HA may give the mobile node's COA to the transmitting node, which allows direct tunnelling from the source by means of the COA. The source may, for example, request the COA from the home agent HA before it transmits an IP data packet to the mobile node.

In packet-switched wireless access networks, such as the GPRS and WLAN, subscribers may move within the network area and from one network to another, causing a change in their access point to the network. As other mobile networks, packet-switched wireless networks also require the implementation of some kind of mobility or location management in order for data packets to be routed to a mobile station's current access point in the network. Data packets arriving from outside an access network, such as the Internet, usually arrive at a special access node, which is for example a gateway or router between the access network and the outside network. This access node transfers the data packets on to the current access point utilizing the mobility management of the wireless access network.

The architecture of, for example, a GPRS network comprises different GPRS support nodes, such as a GGSN and an SGSN (GPRS serving support node). The nodes are interlinked by an intra-operator backbone network, which is implemented by means of a local area network, such as an IP network. Data packets are tunnelled between nodes by means of a GPRS tunnelling protocol GTP. The basic functions of an SGSN node include detecting new mobile stations MS within its coverage area, managing the registration process of new terminals MS together with GPRS registers, transmitting data packets to and from an MS, and recording the locations of mobile stations MS within its area. The main function of a GGSN node is interaction with outside networks. The GGSN connects the operator to systems outside the GPRS network, such as other GPRS networks and data networks, such as the IP network (the Internet). The GGSN includes a GPRS subscriber's PDP addresses (Packet Data Protocol) and routing information, i.e. SGSN addresses. The routing information is used for the GTP tunnelling of data packets arriving from an outside network to the MS's current access point, i.e. the serving SGSN node. To access a GPRS network, an MS first makes its presence known by a GPRS attach procedure. In this procedure, a logic link is established between the SGSN and the MS by setting up a mobility management (MM) context thereto. Furthermore, for the reception and transmission of GPRS data, the MS has to request for a PDP activation procedure. This makes the MS known to the corresponding GGSN. More precisely, one or more PDP contexts are created in the MS, the GGSN and the SGSN for determining different data transfer parameters, such as PDP type (for example IP), PDP address (for example IP address) and quality of service QoS. In other words, a PDP context between different GPRS nodes defines a GTP tunnel, which tunnel is between GGSN and SGSN. One GTP tunnel may include one or more PDP contexts.

PDP context activation may also be defined as a procedure in which the serving GPRS support node (SGSN) together with the gateway GPRS support node (GGSN) that the GPRS subscriber will be using establishes a PDP context for routing purposes. Some important tasks during the PDP context activation are the selection and checking of the access point name (APN) and QoS negotiation.

In DE 197 42 681 A1 a method is described wherein a switching device, which supports a GPRS network allows to connect a terminal station with one of a plurality of packet data communication networks. The selection of the packet data communication network is based on the transmission of a specific network indication parameter from the terminal station. In the method a network indication parameter is transmitted to a serving support node as a special parameter in a PDP context activation procedure.

In WO 00/76249 a method of authorising an Internet Protocol enabled mobile host to access the Internet via a wireless LAN, GSM, or UMTS access network is described. In response to receipt of an access request from the mobile host an IP address routing prefix is sent from the IP router to the mobile host. The authenticity and/or sufficiency of an electronic cash is confirmed and after an authorisation message has been received the passage of IP packets is permitted.

One of the disadvantages associated with the state of the art when the mobile node is roaming between two access networks is that the Mobile IP protocol requires the address of the home agent of the mobile node to be manually defined. This, in turn, may retard the roaming processes.

### Brief disclosure of the invention

An object of the present invention is thus to provide a method and a network implementing the method so as to overcome the above problem. The objects of the invention are achieved by a method and a network, which are characterized by what is stated in the independent claims. Preferred embodiments of the invention are disclosed in the dependent claims.

The invention is based on the idea of delivering the address of a home agent to a mobile node during a PDP activation procedure.

An advantage of the method and arrangement of the invention is shorter response times when roaming is started.

### Brief description of the drawings

In the following, the invention will be described in greater detail by means of the preferred embodiments and with reference to the attached drawings, in which
Figure 1 illustrates a block diagram according to the invention and preferred embodiments thereof; and
Figure 2 illustrates signalling according to an embodiment of the invention.

### Detailed description of the invention

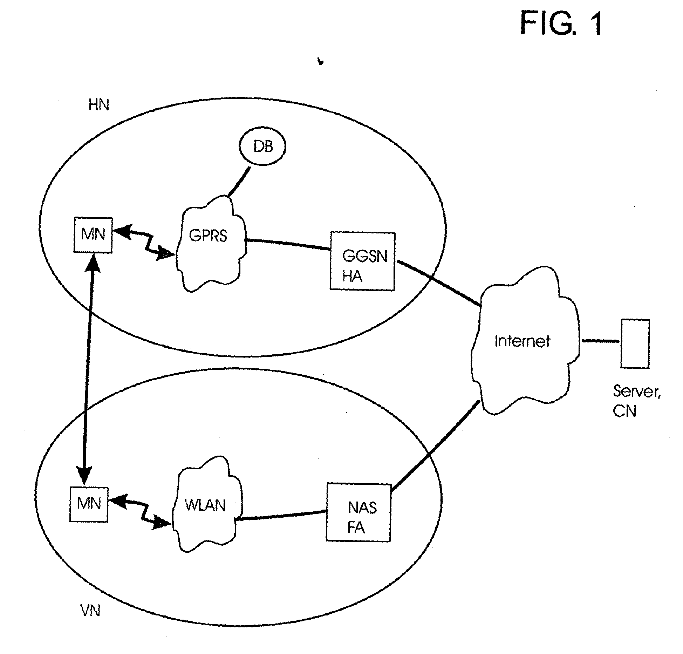

Figure 1 shows a block diagram according to the invention and preferred embodiments, comprising, for the sake of simplicity, only two packet-switched wireless access networks, i.e. a GPRS network GPRS and a WLAN network WLAN. Only the network elements relevant to the invention and the preferred embodiments are shown.

Figure 1 shows the following elements: a mobile subscriber node MN (Mobile Node) running the Mobile IP protocol, the node referring to an element, such as a mobile station or a computer, which is able to change its access point to the network. In other words, mobile node MN may be any equipment supporting the Mobile IP protocol capable of roaming between dif ferent IP networks or IP sub-networks. MN may be e.g. a dual mode GPRS/WLAN terminal.

GPRS and WLAN networks are wireless access networks (Serving Access Network). A serving access network is the access network to which the MN element is linked at a particular moment.

Home network HN is the home network of MN. When MN is located in HN it may work without the assistance of Mobile IP. On the other hand, visited network VN may be defined as any other network than the home network.

Home agent HA may be a router in a home network, which router receives IP packets, instead of MN when MN is not in the home network. HA knows the location of MN and is thus capable of sending packets that it has received to MN. In Figure 1, HA is presented in connection with the GGSN element, but HA can also locate e.g. independently and/or in another network than the home network.

Foreign agent FA may be defined as a router in a visited network, which delivers a temporary address for MN called Care-of-Address, COA. The address is allocated from the address space of a corresponding network. FA is defined only in IPv4. Thus, if there is no FA in the visited network, MN acquires a COA by some other method e.g. by a DHCP (Dynamic Host Configuration Protocol) protocol. Next MN announces its COA address to the home agent. Home agent tunnels, i.e. transfers messages from the point of encapsulation to the point of decapsulation, the packets it received to COA. Finally MN has a connection to the correspond node CN, which is the host computer, e.g. a WWW (World Wide Web) server.

In Figure 1 a GPRS network is defined as the home network of MN, and a WLAN network is the visited network. The GPRS network may also be a visited network, if HA is located in another network than in the GPRS network. It is essential for the invention that the home GPRS network is aware of the address of home agent of MN. The address of the home agent of MN may be stored in the database (e.g. in HLR, Home Location Register) located in the GPRS network or in some other network.

As described above, MN may be a dual mode terminal, e.g. a GPRS/WLAN terminal. MN receives the information on the address of its home agent when activating the GPRS connection for the first time. The connection is called a PDP context. Next, MN may establish mobile IP sessions with the server CN on the Internet. In WLAN network, FA gives temporary address when MN roams into WLAN network.

The mobile IP session between MN and server retains when MN is roaming from GPRS network to WLAN network, and vice versa, if the home agent knows the new address (COA) of the mobile node in the new visited networks. According to the mobile IP procedures, MN announces the new COA to the home agent HA. Therefore, MN must know the address of the home agent. The functionality described above, i.e. the automated management of the address of a home agent, ensures that MN always has the HA address.

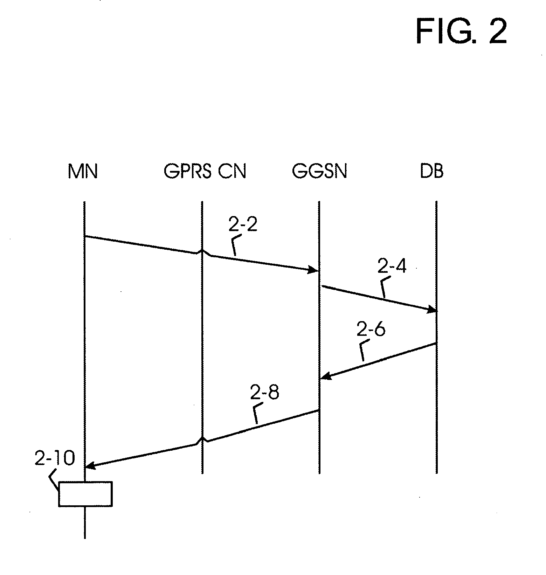

Figure 2 illustrates signalling for configuring an address of the HA element of an access network GPRS via an access point GGSN of the access network for the mobile subscriber node (MN) according to an embodiment of the invention. In step 2-2, MN starts the PDP context activation procedure. This takes place e.g. by sending an Activate PDP context message. The message may comprise an identifier of the mobile node MN, e.g. the IMSI (International Mobile Subscriber Identity) number of a subscriber.

In step 2-4 GGSN realises on the basis of the IMSI number that the sending party is the operator's own client. Next, GGSN requests from the database the address of the home agent HA defined for the subscriber. In step 2-6, the address of the home agent HA is identified in the database based at least partly on the identifier IMSI and retrieved from the database DB to the access point GGSN. In step 2-8, a PDP Context Activate Reply message containing the address of the home agent is transmitted to MN. Alternatively, this can be transmitted in a different message. Finally in step 2-10, MN saves the address of the home agent. When MN later roams into another wireless network, it is given a COA address from the visited network. MN can now use the stored address of the home agent for informing the home agent of the new COA in accordance with the Mobile IP procedures.

An advantage of the invention and its embodiments is that they solve the problem of the Mobile IP protocol requiring the address of a home agent of the mobile node to be manually defined. The invention and its embodiments thus reduce the number of manual settings for terminal equipment and alleviate Mobile IP mobility between GPRS network and another network, like WLAN network. By means of the invention and its embodiments, the mobile IP applications need not to be started again when roaming from one network to another.

If the mobile node starts its function in the WLAN network, the address of the home agent is unknown. When roaming from WLAN network to GPRS network, the active mobile IP sessions cannot thus be retained. How ever, this can be solved by providing the signalling of the authentication of WLAN with definitions for transmittance the address of a home agent.

It will be obvious to a person skilled in the art that as technology advances, the inventive concept can be implemented in various ways. The invention and its embodiments are not limited to the examples described above but may vary within the scope of the claims.

## Claims

1. A method for management of an address of a home agent (HA) in a Mobile IP-type network, a mobile node of the network being capable of roaming between a packet mode home network and a visited network, the method comprising
maintaining an address of a Mobile IP home agent (HA) of a mobile node in association with other subscriber data in a database of a home GPRS network,
initiating (2-2) a packet data protocol context activation in the home GPRS network of the mobile node by the mobile node,
sending (2-8) the address of the home agent to the mobile node during the packet data protocol context activation, and
storing (2-10) the address of the home agent in the mobile node.

2. A method as claimed in claim 1, **characterized by** the mobile node using the stored address of the home agent for informing the home agent of a care-of-address assigned to the mobile node in a visited network when the mobile node roams in the visited network.

3. A method as claimed in claim 1 or 2, **characterized in that** the visited network is a wireless local area network (WLAN) or a Bluetooth network.

4. A method as claimed in any one of the previous claims 1 to 3, **characterized by** sending (2-8) the address of the home agent to the mobile node during the packet data protocol context activation only when activating a GRPS connection for the first time.

5. A packet mode mobile communications network for management of an address of a home agent (HA), the network supporting mobile IP, comprising a subscriber database for storing subscriber data, wherein
the subscriber database is configured to store an address of a Mobile IP home agent (HA) of a mobile node in association with other subscriber data related to the mobile node,
the network is configured to send (2-8) the address of the home agent to the mobile node during an activation of a packet data protocol context for the mobile nodes,
the mobile node is configured to store (2-10) the address of the home agent to be subsequently used in a Mobile IP registration procedure while roaming in another wireless network.

## Patentansprüche

1. Verfahren zum Management einer Adresse eines Home-Agent (HA) in einem Mobile-IP-Netz, wobei ein mobiler Knoten des Netzes dazu geeignet ist, zwischen einem Datenpaket-Heimnetz und einem Fremdnetz zu vermitteln, wobei das Verfahren umfasst:
- Aufrechterhalten einer Adresse eines Mobile-IP-Home-Agent (HA) eines mobilen Knotens in Verbindung mit weiteren Teilnehmerdaten in einer Datenbasis eines GPRS-Heimnetzes;
- Initiieren (2-2) einer Paketdatenprotokollkontextaktivierung in dem GPRS-Heimnetz des mobilen Knotens durch den mobilen Knoten;
- Senden (2-8) der Adresse des Home-Agent zu dem mobilen Knoten während der Paketdatenprotokollkontextaktivierung; und
- Speichern (2-10) der Adresse des Home-Agent in dem mobilen Knoten.

2. Verfahren nach Anspruch 1, **dadurch gekennzeichnet, dass** der mobile Knoten die gespeicherte Adresse des Home-Agent verwendet, um den Home-Agent über eine Care-of-Addresse zu informieren, die dem mobilen Knoten in einem Fremdnetz zugeordnet ist, wenn der mobile Knoten in dem Fremdnetz vermittelt.

3. Verfahren nach Anspruch 1 oder 2, **dadurch gekennzeichnet, dass** das Fremdnetz ein drahtloses lokales Netz (WLAN) oder in Bluetooth-Netz ist.

4. Verfahren nach einem der Ansprüche 1 bis 3, **dadurch gekennzeichnet, dass** die Adresse des Home-Agent während der Paketdatenprotokollkontextaktivierung nur dann zu dem mobilen Knoten gesendet wird, wenn eine GRPS-Verbindung zum ersten Mal aktiviert wird.

5. Datenpaket-Mobilkommunikationsnetz zum Management einer Adresse eines Home-Agent (HA), das ein Mobile IP unterstützt und eine Teilnehmer-Datenbasis zum Speichern von Teilnehmerdaten umfasst, wobei:
- die Teilnehmer-Datenbasis so konfiguriert ist, dass sie eine Adresse eines Mobile-IP-Home-Agent (HA) eines mobilen Knotens in Verbindung mit weiteren Teilnehmerdaten, die zu dem mobilen Knoten in Beziehung stehen, speichert;
- das Netz so konfiguriert ist, dass es die Adresse des Home-Agent während einer Aktivierung eines Paketdatenprotokollkontextes für den mobilen Knoten zu dem mobilen Knoten sendet (2-8); und
- der mobile Knoten so konfiguriert ist, dass er die Adresse des Home-Agent, der anschließend in einem Mobile IP - Registrierungsverfahren verwendet wird, speichert (2-10), während er in einem weiteren Netz vermittelt.

## Revendications

1. Un procédé pour la gestion d'une adresse d'un agent mère (HA) dans un réseau de type Mobile IP, un noeud mobile du réseau étant capable d'itinérance entre un réseau domestique en mode paquet et un réseau visité, le procédé comprenant
le maintien d'une adresse d'un agent mère (HA) de Mobile IP d'un noeud mobile en association avec d'autres données d'abonnés dans une base de données d'un réseau GPRS domestique,
l'initiation (2-2) d'une activation de contexte de protocole de données en paquet dans le réseau GPRS domestique du noeud mobile par le noeud mobile,
l'envoi (2-8) de l'adresse de l'agent mère au noeud mobile lors de l'activation du contexte de protocole de données en paquet, et
le stockage (2-10) de l'adresse de l'agent mère dans le noeud mobile.

2. Un procédé tel que revendiqué dans la revendication 1, **caractérisé par** le noeud mobile utilisant l'adresse stockée de l'agent mère pour indiquer à l'agent mère une adresse temporaire assignée au noeud mobile dans un réseau visité lorsque le noeud mobile est en itinérance dans le réseau visité.

3. Un procédé tel que revendiqué dans la revendication 1 ou 2, **caractérisé en ce que** le réseau visité est un réseau local sans fil (WLAN) ou un réseau Bluetooth.

4. Un procédé tel que revendiqué dans l'une quelconque des revendications 1 à 3 précédentes, **caractérisé par** l'envoi (2-8) de l'adresse de l'agent mère au noeud mobile lors de l'activation du contexte de protocole de données en paquet uniquement lors de l'activation d'une connexion GPRS pour la première fois.

5. Un réseau de communication mobile en mode paquet pour gérer une adresse d'un agent mère (HA), le réseau prenant en charge le mobile IP, comprenant une base de données d'abonnés pour stocker des données d'abonnés, dans lequel
la base de données d'abonnés est configurée pour stocker une adresse d'un agent mère (HA) de Mobile IP d'un noeud mobile en association avec d'autres données d'abonnés associées au noeud mobile,
le réseau est configuré pour envoyer (2-8) l'adresse de l'agent mère au noeud mobile lors d'une activation d'un contexte de protocole de données en paquet pour le noeud mobile,
le noeud mobile est configuré pour stocker (2-10) l'adresse de l'agent mère pour son utilisation ultérieure dans un processus d'enregistrement de Mobile IP tout en étant en itinérance dans un autre réseau sans fil.
